# EUROPEAN PATENT APPLICATION

(11) **EP 4 306 577 A1**
(43) Date of publication of application: **17.01.2024**
(21) Application number: 22382656.1
(22) Date of filing: 11.07.2022
(51) Int. Cl.: C08J 9/00, B29C 70/48, B29C 70/66, C08J 9/32

(54) **A COMPOSITE WITH A VITRIMER-BASED FOAMING CORE AND ITS APPLICATION IN PREPARING RECYCLABLE AND CURVED SANDWICH STRUCTURES**

(71) Applicant: Fundación IMDEA Materiales, 28906, Getafe (Madrid) (ES)
(72) Inventor: LIN, Xuebao, 28918 Leganés, Madrid (ES); WANG, De-Yi, 28918 Leganés, Madrid (ES)
(74) Representative: Elzaburu S.L.P.

(57) **Abstract**

The present invention refers to a process to obtain lightweight foaming composites based on vitrimer resins such as benzoxazine resin (BOz) with dynamic S-S bond, epoxy resin with dynamic imine-amine bond, epoxy resin with carboxylate bond. By the method of the invention, pre-foaming sheets can be composited by hot-press due to the dynamic bond can work as a new connection between different pre-foaming sheets The presence of these dynamic bonds enables flexural deformation and recyclability of foam, properties that make this composite very useful to prepare curved sandwich panels to be applied to the manufacturing of pieces of vehicles such as aicrafts.

## Description

### FIELD OF THE INVENTION

The present invention relates to a vitrimer-based syntactic foam and its application in recyclable and curved lightweight sandwich composites. The vitrimer-based syntactic foam can be used to prepare recyclable and curved sandwich composites that can be used as flexible interiors in the transportation, defense, construction, offshore and aerospace industries.

### BACKGROUND OF THE INVENTION

The thermosetting resin based rigid foam has the advantages of high strength and easy foaming process. At present, successfully industrialized foams are mainly polyurethane and phenolic foams, which have a faster curing speed that can expand and be shaped easily in a mold. In comparison, because of its high curing temperature and slow curing rate, benzoxazine resin or epoxy resin is rarely used in the preparation of foam materials.

As the patent EP1420042B1 defines, syntactic foams are created as a composite of closed-cell materials containing microspheres, encapsulated within a matrix. The inventors claim that syntactic foams tend to have a limiting density of around 500 kg/m3 due to the amount of matrix material such as epoxy, phenolic resin or polyurethane matrix that are required to wet the surface of the closed-cell materials.

US9776341B2 discloses a set of low-density composite materials with laminar structures comprising a fiber reinforced layer and expandable filler which were bonded by a curable matrix with a viscosity in the range of 100 Pa·s to 1000 Pa·s (under 80-120 °C).

In US 8007893B2, a multilayer reinforcement structure was designed to prepare a flexible core layer. Non-woven layer of elongated fibers and microspheres including a blowing agent were mentioned, but the product can't not be used to prepare sandwich composites.

The literature "Epoxy Resin with Exchangeable Disulfide Crosslinks to Obtain Reprocessable, Repairable and Recyclable Fiber-Reinforced Thermoset Composites" reported a recyclable epoxy resin containing S-S dynamic bonds for the first time. But a recyclable foam based on the epoxy vitrimer had not been reported yet.

Patent US2019/0241713A1 discloses a method for the degradation of a phenolic resin containing material which is subjected to an aminolysis with a reagent containing at least one amino group.

US2016/0214284A1 discloses a method for making a curved sandwich structure by using a reconfigurable UV source mounting element. How to prepare a curved sandwich structure by recyclable thermosetting resin has still not been reported.

At present, all the sandwich composites need adhesives to bond the panel and the foaming core. Meanwhile, the process of sandwich composites is also limited by glues or adhesive films.

Some patents such as GB1414506, EP0630956 reported sandwich composites with good flame retardancy, low thermal conductivity and sound insulation performance.

### DESCRIPTION OF THE INVENTION

The present invention relates to a syntactic bendable and recyclable foam composite and its application in recyclable and curved lightweight sandwich composites. The term 'syntactic' is derived from the Greek words syn and tacheo, meaning effectively "put with" or "put together". This syntactic bendable and recyclable foam composited is made of recyclable vitrimer resin such as benzoxazine resin or epoxy resin containing dynamic chemical bond such as S-S dynamic bonds, imine-amine bonds, carboxylate bonds or dynamic B-O Bonds, which play a key role as second bonding component. Furthermore, the obtained structure presents a large number of closed-cell microspheres works as foaming structure and chopped fibers work as reinforced agent.

The vitrimer-based foam composite is prepared by a two-step sheet foaming method according to four primary and unique routes:
1. The foaming process occurs simultaneously with the curing of the liquid resin, which can be carried out without a closed mold (Examples 1-5).
2. The unique feature of vitrimers were used to compound the pre-foaming sheets, then the thickness, density and mechanical properties of the foam can be controlled (Examples 1-3).
3. Different resins containing the same dynamic bond can be used as matrix together (Example 6).
4. The unique feature of vitrimers were used to prepare the curved shape of foam, which is critical for curve shape sandwich composites (Examples 9-12).

This kind of syntactic vitrimer-based foaming composite has many advanced properties:
1. The composite presents low density and well deformability and recyclability which are critical for preparing reusable curved shape sandwich composites.
2. It has good thermal properties and it is easy to compound with CFRP panels by out-of autoclave processes;
3.It is a good flame retardant and provides thermal and sound insulation, which are critical functions for the interior materials of automotive, rail and aircraft vehicles.

Thus, in a first aspect the present invention refers to a process to obtain a flame retardant lightweight foaming composite comprising the following steps:
i. mixing the following components:
   - 40-80 wt.% of a resin selected from a benzoxazine vitrimer resin with at least one disulfide bond, an epoxy vitrimer resin with at least an imine-amine bond or an epoxy resin with at least one carboxylate bond, or a polyurethane vitrimer resin with at least one Diels-Alder bond and mixtures thereof;
   - 0.2-10 wt.% of a catalyst selected from CuCl₂, trifluoroacetate and its salts, imidazole and its derivatives or zinc catalysts and their salts;
   - 5-50 wt. % of a foaming agent selected from thermal expandable microsphere or glass microspheres,
   - 0-10 wt.% of at least one toughening agent selected from epoxy resin, polyurethane resin or silicone resin;
   - 0.5-25 wt. % of flame retardant additives;
ii. inducing the curing process of the mixture obtained in a previous foaming step by a thermal treatment at a temperature between 80-180ºC during a time between 3-30 minutes, so that a pre-foaming sheet is obtained;
iii. hot-pressing the pre-foaming cured material obtained in the previous step at a temperature between 120-200 ºC during a time between 1-6 hours.

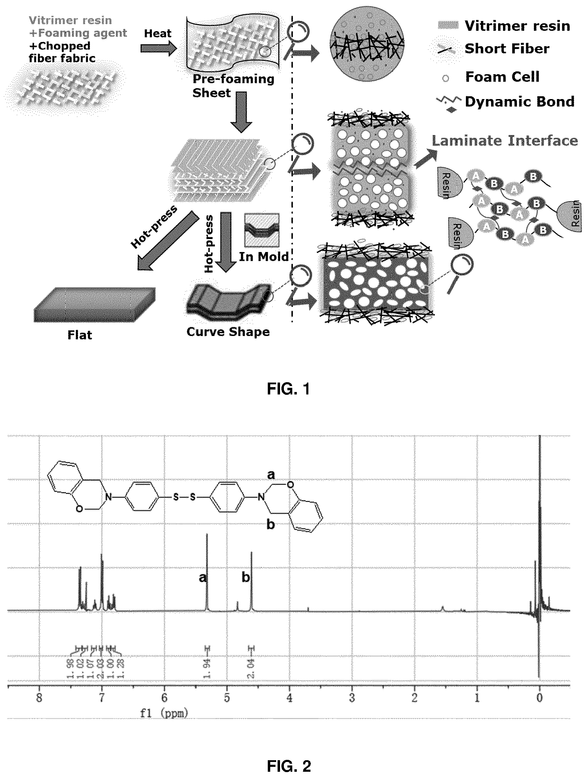

By this process, the reactivity of the dynamic bonds under is activated with the high temperature, so that fully foaming structure composites are obtained. Here we define this technology as sheet foaming method (Fig.1) that it different from the traditional foaming technology.

Preferably, the mixture of step (i) comprises 30-55 wt.% of resin.

Preferably, the matrix of the mixture of step (i) comprises a compound with the following formula: 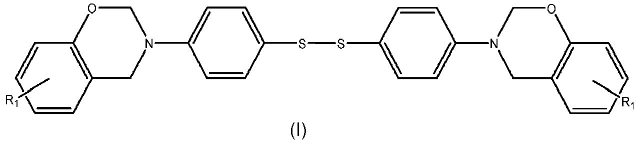 wherein R₁ is selected from H or alkyl C₁-C₂₀.

Preferably, the matrix of the mixture of step (i) comprises a compound with the following formula: 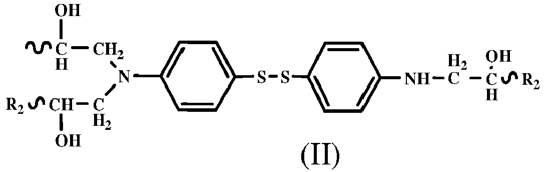 wherein R₂ is selected from the following groups:

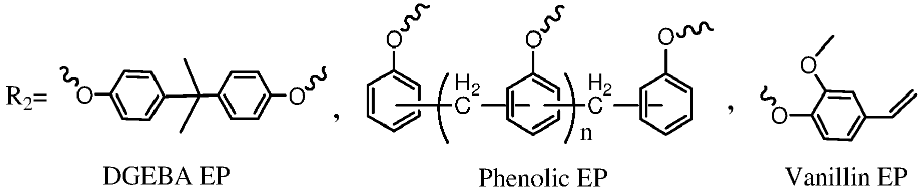

Preferably, the matrix of the mixture of step (i) comprises a compound with the following formula: 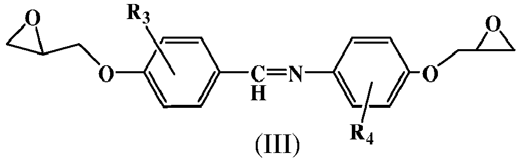 wherein R₃ and R₄ are independently selected from H, -OCH₃ or an alkyl C₁-C₄ group.

Preferably, the matrix of the mixture of step (i) comprises a compound with the following formula:

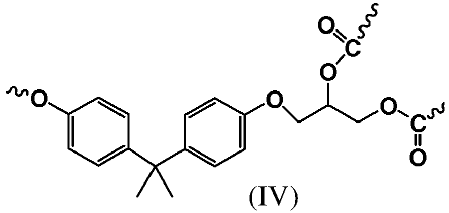

Preferably, the matrix of the mixture of step (i) comprises a compound with the following formula: 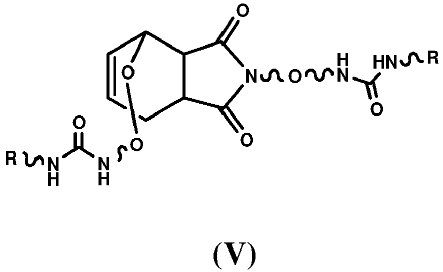 wherein R is selected from the following groups:

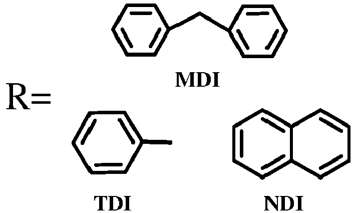

Preferably, the mixture of step (i) comprises a solvent selected from acetone, cyclohexanone, butyl alcohol, isopropanol, 1,4-dioxane, tolune, xylenes, chloroform, tetrahydrofuran (THF), N,N-dimethylformamide (DMF) or combinations thereof.

Flame retardant performance of the foaming composite of the invention can be improved by adding some commercial flame retardant additives. Examples of these additives are Halogen-containing FRs; Intumescent flame retardants composed of APP and char forming agent; Expandable graphite; DOPO and its derivatives; Organophosphates; Phosphinate and its derivatives.

The process according to any one of the previous claims wherein the mixture of step (i) is deposited onto a support to carry out step (ii), wherein said support is preferably a fiber fabric. The fiber fabric may comprise chopped glass fibers or chopped carbon fibers. The chopped fibers can be dispersed into the vitrimer resin irregularly or regularly. More preferably, the support is a non-woven chopped fiber mat structure.

To obtain a composite with a pre-defined shape, the step (iii) of the process of the invention may be carried out on a mold with a desired defined shape.

Another aspect of the invention refers to a bendable and recyclable foaming composite obtained by the method described above which is characterized in that:
a) it comprises at least one foaming sheet comprising a vitrimer matrix based on the compounds defined above, reinforced fibers embedded in said matrix and hollow close cells,
b) the hollow closed cells structure of the foam composite is formed of thermal expandable microsphere or glass microsphere,
c) the resin forming the vitrimer matrix is partly cured, and forms dynamic bonds between the different foaming sheets to form a complete foaming composite.

Preferably, the foaming composite of the invention is characterized in that it presents a density between 120-250 g/m³, and/or a compressive strength of between 0.8-2 MPa and/or a heat resistance of between 80-150 °C and/or a flame retardant property of V-0 level and/or a thermal conductivity between 0.04-0.08 W/m.k.

A further aspect of the invention refers to a sandwich structure comprising the bendable and recyclable foaming composites as described above, which preferably comprises a panel with a defined form.

Another aspect refers to an article for vehicles comprising the sandwich structure as described above.

The term "vehicle" is used in its broadest sense and includes all types of aircraft, spacecraft, watercraft, and ground vehicles. For example, the vehicle can include, but is not limited to an aerospace substrate (a component of an aerospace vehicle, such as an aircraft such as, for example, airplanes (e.g., private airplanes, and small, medium, or large commercial passenger, freight, and military airplanes), helicopters (e.g., private, commercial, and military helicopters), aerospace vehicles (e.g., rockets and other spacecraft), and the like). The article may be a component of the body of the vehicle, such as an automotive hood, door, trunk, roof, and the like, such as an aircraft or spacecraft wing, fuselage, and the like; such as a watercraft hull, and the like.

With the method of the present invention, some vitrimer resins such as benzoxazine resin (BOz) with dynamic S-S bond, epoxy resin with dynamic imine-amine bond, epoxy resin with carboxylate bond and so on were used to prepare a kind of recyclable and bendable foaming composite. The presence of these dynamic bonds allows to design a novel secondary sheet foam molding method of thermosetting resin. In the first step, the resin, foaming agent and reinforced agent were mixed and well compounded, and some pre-foaming sheets were prepared. It is remarkable that in the known processes, it is impossible to composite the pre-foaming sheets based on these resins into a full foam structure, since the resin has been cured during foaming process and no shape can be done. However, with the method of the invention, for the vitrimer such as benzoxazine resin (BOz) with dynamic S-S bond, even though the BOz structure was gelled or cured, some pre-foaming sheets can be composited by hot-press due to the dynamic bond can work as a new connection between different pre-foaming sheets. Moreover, the dynamic bond enables flexural deformation and recyclability of foam, which is critical to prepare curved sandwich composites. It is the key innovations of this technology.

### BRIEF DESCRIPTION OF FIGURES

Fig.1 Scheme of the process for preparing the bendable and recyclable foaming composites of the invention.
Fig.2 Chemical structure characterization of Boz (benzoxazine)-based vitrimer by H¹-NMR.
Fig.3 Curing behavior of pure BOz vitrimer without catalysts.
Fig.4 Curing thermal behavior of BOz vitrimer with curing agent CuCl₂ in example 1.
Fig.5 Pictures of Re-BOz foam in example 1 and the curved sample in example 9.

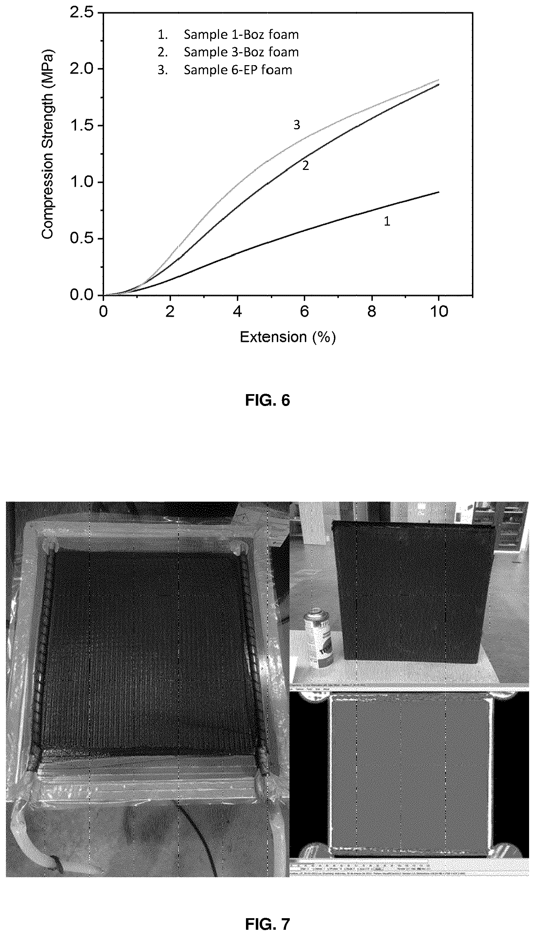

Fig. 6 Compression strength of BOz foam and EP (epoxy) foam samples with different layers.
Fig.7 Pictures of recyclable epoxy based CFRP as surface panels in example 13.
Fig.8 Results of flat tensile testing of sandwich composites in example 11 and example 12.
Fig. 9 Picture of Experiments to verify the recycling of carbon fiber fabrics in example 17.

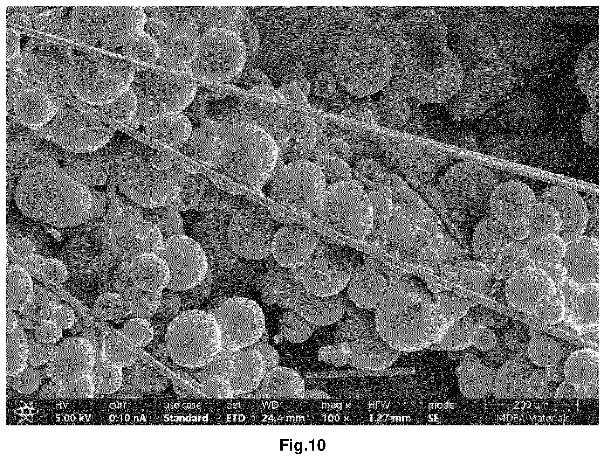

Fig.10 SEM picture of the microstructure of the vitrimer foam. Closed-cell, reinforced fiber and vitrimer resin as binder can be observed.

### EXAMPLES

### Example 1: Obtaining bendable and recyclable BOz based foaming composite.

60 wt% BOz resin of phenol-based benzoxazine (BOz) with S-S bond (formulation I), 10 wt% foaming agent, 0.5 % CuCl₂, 5 wt% epoxy resin and 25 wt% solvent were mixed under 30 min stronger stirring. Then the mixed resin slurry was coated or impregnated onto the chopped glass fiber fabric. After baking at 130ºC in the oven for 5 minutes, a pre-foaming sheet was obtained. In the second step, 9 pieces of pre-foaming sheets were laminated and hot-press at 180 ºC into a complete foaming structure with 10 mm thickness. It can be processed in a steel mold or without mold. Finally, according to the standard ASTM D 1622, a BOz foam with a density of 150±10 g/m³ was obtained, which is bendable and recyclable. The compressive strength of BOz foam is 0.8 MPa according to the standard ISO 844. The heat resistance of BOz foam is 150 °C according to the standard DIN 53424. The flame retardant property is V-1 level under UL-94 standard test. The thermal conductivity is low to 0.04 W/m.k according to the standard DIN EN 12939. All data obtained in the examples were tested according to these same standards.

### Example 2: Obtaining flame retardant BOz based foaming composite.

55 wt% BOz resin phenol-based benzoxazine (BOz) with S-S bond (formulation I), 10 wt% foaming agent, 1wt% 2-Methylimidazole, 5 wt% polyurethane resin, 4wt% flame retardant APP and 25 wt% solvent were mixed under 30 min stronger stirring. Then the mixed resin slurry was coated or impregnated onto the chopped glass fiber fabric. After baking at 150 ºC in the oven for 10 minutes, a pre-foaming sheet was obtained. In the second step, 10 pieces of pre-foaming sheets were laminated and hot-press at 190 ºC into a complete foaming structure with 10 mm thickness. It can be processed in a steel mold or without mold. Finally, a BOz foam with a density of 150±10 g/m³ was obtained, which is bendable and recyclable. The compressive strength of BOz foam is 1.2 MPa. The heat resistance of BOz foam is 150 ºC. The flame retardant property is V-0 level. The thermal conductivity is low to 0.04 W/m.k.

### Example 3: Obtaining flame retardant BOz based foaming composite.

55 wt% BOz resin phenol-based benzoxazine (BOz) with S-S bond (formulation I), 10 wt% foaming agent, 1wt% 2-Methylimidazole, 5 wt% epoxy resin, 4 wt% flame retardant APP and 25 wt% solvent were mixed under 30 min stronger stirring. Then the mixed resin slurry was coated or impregnated onto the chopped glass fiber fabric. After baking at 150 ºC in the oven for 10 minutes, a pre-foaming sheet was obtained. In the second step, 12 pieces of pre-foaming sheets were laminated and hot-press at 190 ºC into a complete foaming structure with 10 mm thickness. It can be processed in a steel mold or without mold. Finally, a BOz foam with a density of 190±10 g/m³ was obtained, which is bendable and recyclable. The compressive strength of BOz foam is 2±0.2 MPa (10% extension). The heat resistance of BOz foam is 150 ºC. The flame retardant property is V-0 level. The thermal conductivity is low to 0.04 W/m.k.

### Example 4: Obtaining flame retardant BOz based foaming composite.

55 wt% BOz resin phenol-based benzoxazine (BOz) with S-S bond (formulation I), 10 wt% foaming agent, 1wt% 2-Methylimidazole, 5 wt% polyurethane resin, 5% expandable graphite as flame retardantand 25 wt% solvent were mixed under 30 min stronger stirring. Then the mixed resin slurry was coated or impregnated onto the chopped carbon fiber fabric. After baking at 150 ºC in the oven for 10 minutes, a pre-foaming sheet was obtained. In the second step, 10 pieces of pre-foaming sheets were laminated and hot-press at 190 ºC into a complete foaming structure with 10 mm thickness. It can be processed in a steel mold or without mold. Finally, a BOz foam with a density of 130±10 g/m³ was obtained, which is bendable and recyclable. The compressive strength of BOz foam is 1.0 MPa. The heat resistance of BOz foam is 140 ºC. The flame retardant property is V-0 level. The thermal conductivity is low to 0.05 W/m.k.

### Example 5: Obtaining flame retardant bendable and recyclable Epoxy based foaming composite.

50 wt% epoxy resin with dynamic imine-amine bond (formulation III), 10 wt% foaming agent, 5 wt% polyurethane resin, 5% intumescent flame retardant based on APP and Pentaerythritol and 30 wt% solvent were mixed under 30 min stronger stirring. Then the mixed epoxy resin slurry was coated or impregnated onto the chopped glass fiber fabric. After baking at 100 ºC in the oven for 20 minutes, a pre-foaming sheet was obtained. In the second step, 10 pieces of pre-foaming sheets were laminated and hot-press at 140 ºC into a complete foaming structure with 10 mm thickness. It can be processed in a steel mold or without mold. Finally, an epoxy foam with a density of 160±10 g/m³ was obtained, which is bendable and recyclable. The compressive strength of epoxy foam is 1.2 MPa. The heat resistance of epoxy foam is 90 ºC. The flame retardant property is V-0 level. The thermal conductivity is low to 0.04 W/m.k.

### Example 6: obtaining flame retardant bendable and recyclable Epoxy based foaming composite.

50 wt% epoxy resin with dynamic carboxylate bond, 5 wt% catalyst Zinc Acetate (formulation IV), 10 wt% foaming agent, 5 wt% polyurethane resin, 5% expandable graphite as flame retardant and 25 wt% solvent were mixed under 30 min stronger stirring. Then the mixed epoxy resin slurry was coated or impregnated onto the chopped glass fiber fabric. After baking at 100ºC in the oven for 10 minutes, a pre-foaming sheet was obtained. In the second step, 12 pieces of pre-foaming sheets were laminated and hot-press at 160 ºC into a complete foaming structure with 10 mm thickness. It can be processed in a steel mold or without mold. Finally, an epoxy foam with a density of 200±10 g/m³ was obtained, which is bendable and recyclable. The compressive strength of epoxy foam is 1.6 MPa. The heat resistance of epoxy foam is 100 ºC. The flame retardant property is V-0 level. The thermal conductivity is low to 0.05 W/m.k.

### Example 7: obtaining flame retardant bendable and recyclable Benzoxazine-Epoxy based composite.

25 wt% benzoxazine (BOz) with S-S bond (formulation I) and 25 wt% epoxy resin (EP) with dynamic S-S bond (formulation II), 10 wt% foaming agent, 5 wt% polyurethane resin, 5% 5% expandable graphite as flame retardant and 30 wt% solvent were mixed under 30 min stronger stirring. Then the mixed BOz-EP resin slurry was coated or impregnated onto the chopped glass fiber fabric. After baking at 140 ºC in the oven for 20 minutes, a pre-foaming sheet was obtained. In the second step, 10 pieces of pre-foaming sheets were laminated and hot-press at 180 ºC into a complete foaming structure with 10 mm thickness. It can be processed in a steel mold or without mold. Finally, an BOz-EP foam with a density of 160 ±10 g/m³ was obtained, which is bendable and recyclable. The compressive strength of BOz-EP foam is 1.2 MPa. The heat resistance of BOz-EP foam is 130 ºC. The flame retardant property is V-0 level. The thermal conductivity is low to 0.04 W/m.k.

### Example 8: obtaining flame retardant bendable and recyclable Benzoxazine-Epoxy based composite.

40 wt% benzoxazine (BOz) with S-S bond (formulation I) and 10 wt% epoxy resin (EP) with dynamic S-S bond (formulation II), 10 wt% foaming agent, 5 wt% polyurethane resin, 5% expandable graphite as flame retardant and 30 wt% solvent were mixed under 30 min stronger stirring. Then the mixed BOz-EP resin slurry was coated or impregnated onto the chopped glass fiber fabric. After baking at 140 ºC in the oven for 20 minutes, a pre-foaming sheet was obtained. In the second step, 10 pieces of pre-foaming sheets were laminated and hot-press at 180 ºC into a complete foaming structure with 10 mm thickness. It can be processed in a steel mold or without mold. Finally, an BOz-EP foam with a density of 160±10 g/m³ was obtained, which is bendable and recyclable. The compressive strength of BOz-EP foam is 1.2 MPa. The heat resistance of BOz-EP foam is 140 ºC. The flame retardant property is V-0 level. The thermal conductivity is low to 0.04 W/m.k.

### Example 9: Obtaining flame retardant bendable and recyclable Polyurethane based foaming composite.

60 wt% polyurethane resin (PU) with dynamic furan/maleimide Diels-Alder (DA) reactive bond (formulation V), 10 wt% foaming agent, 10% intumescent flame retardant based on APP and Pentaerythritol and 20 wt% solvent were mixed under 30 min stronger stirring. Then the mixed epoxy resin slurry was coated or impregnated onto the chopped glass fiber fabric. After baking at 80 ºC in the oven for 5 minutes, a pre-foaming sheet was obtained. In the second step, 10 pieces of pre-foaming sheets were laminated and hot-press at 150 ºC into a complete foaming structure with 10 mm thickness. It can be processed in a steel mold or without mold. Finally, an PU foam with a density of 180±10 g/m³ was obtained, which is bendable and recyclable. The compressive strength of epoxy foam is 0.8 MPa. The heat resistance of PU foam is 100 ºC. The flame retardant property is V-0 level. The thermal conductivity is low to 0.04 W/m.k.

### Example 10: Obtaining curved BOz foaming composite.

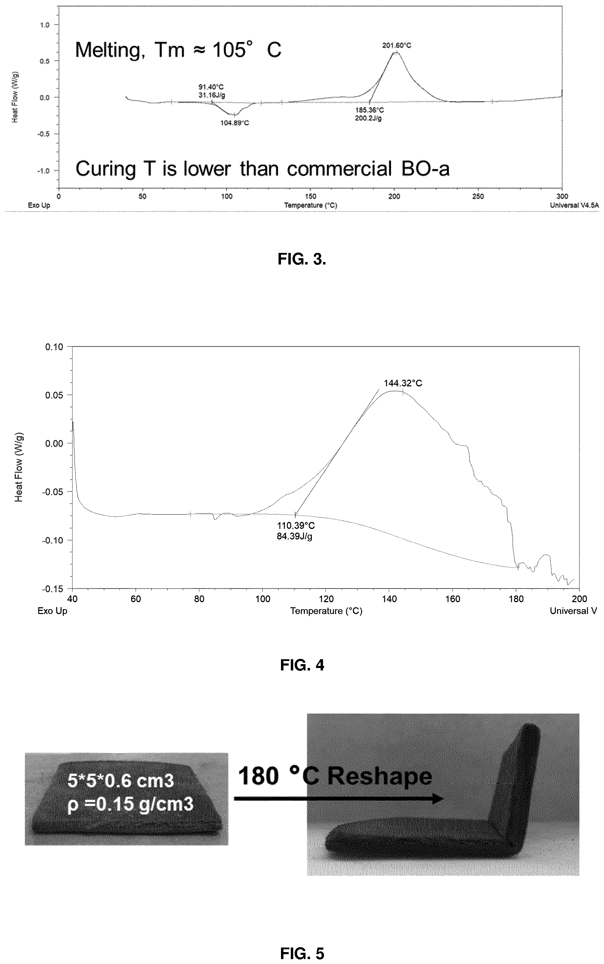

A BOz foaming composite with 6 mm thickness was prepared according to example 1, which was put into a right angle mould to reshape the foam. The mold is heated to 180ºC, and the BOz composite was kept in the mold about 5 min, then clamping and pressing to prepare a curved BOz foam (Fig. 5). The curved BOz foam should stay in the mold for 30 minutes to cool down to less than 100 degrees before taking it out, which can be used to prepare curved sandwich structure composites.

### Example 11: Obtaining curved sandwich composites comprising the BOz foaming composite.

A BOz foaming composite prepared according to example 1 was put into a suitable mold with desired curved shape so that the foam may be re-shaped. The mold is heated to 180ºC, and the BOz composite was kept in the mold about 5 min, then clamping and pressing to prepare a curved BOz foam. The curved BOz foam should stay in the mold for 30 minutes to cool down to less than 100 degrees before taking it out, which can be used to prepare curved sandwich structure composites.

Two fiber reinforced BOz composites panels with 0.5-1 mm thickness and unique curved shapes are prepared based on the commercial Benzoxazine resin in advance. Then apply adhesive to one side of the panels and glue the curved BOz foam from both sides and place it into a specific mold. After the adhesive curing, a kind of curved sandwich composites with an areal density of 6±1 kg/m² was obtained, which is suitable for the interior decoration application of different transportation equipment. The maximum compressive strength of sandwich composites is 2±0.5 MPa. The flat tensile strength of sandwich panel sample is 0.2 ±0.05 MPa according to the standard ASTM C297. The flame retardant property is V-0 level. The thermal conductivity is low to 0.06 W/m.k.

### Example 12: Obtaining curved sandwich composites comprising the EP foaming composite.

An epoxy foam prepared in sample 4 was put into a suitable mold with curved shape of core. The mold is heated to 150 ºC, and the epoxy foam keep in the mold about 10 min, then clamping and pressing to prepare curved epoxy foam. The curved epoxy foam should stay in the mold for 30 minutes to cool down to less than 50 degrees before taking it out, which can be used to prepare curved sandwich structure composites.

Two fiber reinforced epoxy composites panels with 0.5-1 mm thickness and unique curved shapes are prepared based on the commercial DEGBA-EP resin in advance. Then apply adhesive to one side of the panels and glue the curved EP foam from both sides and place it into a specific mold.

After the adhesive curing, a kind of curved sandwich composites with an areal density of 6±1 kg/m² was obtained, which is suitable for the interior decoration application of different transportation equipment. The maximum compressive strength of sandwich is 2±0.5 MPa. The flat tensile strength of sandwich panel sample is 0.5 ±0.05 MPa according to the standard ASTM C297. The flame retardant property is V-0 level. The thermal conductivity is low to 0.06 W/m.k.

### Example 13: Preparing recyclable carbon fiber reinforced epoxy composites (CFRP) with dynamic S-S bonds as surface panel for fully recyclable lightweight curved sandwich composites.

A curing agent 4,4-dithiodianiline with disulfide bond (S-S) was used to prepare recyclable EP CFRP. 70 wt% DGEBA epoxy resin and 30 % 4,4-dithiodianiline was mixed under 70 ºC for 30 min to prepare an EP resin with low viscosity, which can be used in the VARTM processing. Three-layer plain weave carbon fiber fabrics and assistant diversion fabrics and tubes were laid in a VARTM mold. With the vacuum increasing, prepared EP resin was poured into the mold fast. After all the carbon fabrics were immersed by EP resin and no obvious bubbles remained, the tube for adding resin was closed and the high vacuum was keep in the mold, then put the mold into the oven for 4-6 h curing process under 120 ºC. A carbon fiber reinforced EP panel with 1 mm thickness based on the epoxy resin containing dynamic S-S bond are prepared. Then the panels can be composited with the BOz foam prepared in example 1 directly in a specific mold.

### Example 14: obtaining fully recyclable lightweight curved sandwich composites with dynamic S-S bonds.

Two fiber reinforced panels prepared in sample 11 can be composited with the BOz foam prepared in example 1 directly in a specific mold. Then hot press temperature is 210ºC and the heating time is 60 min. After the panels and foaming core were bonded by S-S exchange reaction, a kind of sandwich composites with a areal density of 7±1 kg/m2 was obtained, which is suitable for the interior decoration application of different transportation equipment. The maximum compressive strength of sandwich is 2±0.5 MPa. The flat tensile strength of sandwich panel sample is 0.3 ±0.05 MPa. The thermal conductivity is low to 0.06 W/m.k.

### Example 15: Preparing recyclable carbon fiber reinforced epoxy composites (CFRP) with dynamic imine-amine bonds as surface panel for fully recyclable lightweight curved sandwich composites.

The epoxy resin with dynamic imine-amine bond (formula III) was used to prepare recyclable EP CFRP. 70 wt% epoxy resin (III) and 30 % curing agent DDM was mixed under 90 ºC for 30 min to prepare an EP resin, which can be used to prepare prepreg containing plain weave carbon fiber fabrics. Three-layer prepreg were laid up and hot pressed under 140-150 ºC for 4 h to prepare carbon fiber reinforced EP panel with 1 mm thickness. Then the panels can be composited with the EP foam prepared in example 4 directly in a specific mold.

### Example 16: preparation of fully recyclable lightweight curved sandwich composites with dynamic imine-amine bonds.

Two fiber reinforced panels prepared in sample 13 can be composited with the EP foam prepared in example 4 directly in a specific mold. The hot press temperature is 160 ºC and the heating time is 30 min. After the panels and foaming core were bonded by imine-amine exchange reaction, a kind of sandwich composites with an areal density of 7±1 kg/m2 was obtained, which is suitable for the interior decoration application of different transportation equipment. The maximum compressive strength of sandwich is 2±0.5 MPa. The flat tensile strength of sandwich panel sample is 0.3 ±0.05 MPa. The thermal conductivity is low to 0.06 W/m.k.

### Example 17: Recycling technology of fully recyclable lightweight curved sandwich composites.

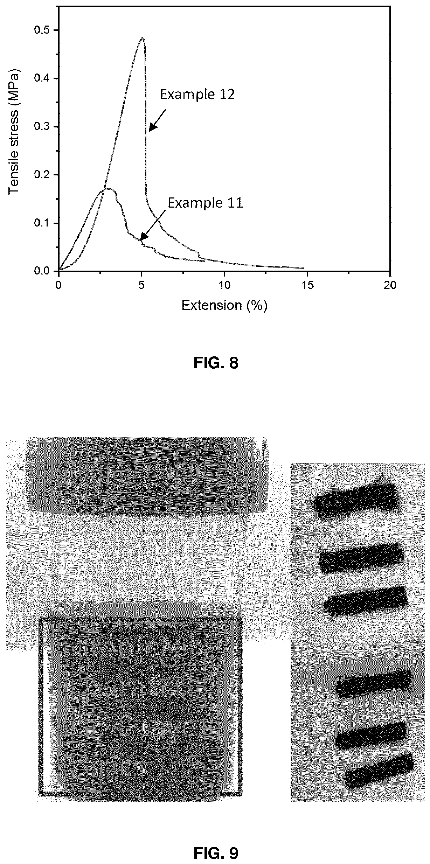

A fully recyclable lightweight curved sandwich composites based on vitrimers with S-S bonds prepared in example 8 was processed by mixed organic solvent immersion. The mixed organic solvent included 10-50 wt% mercaptoethanol (ME), 10-50 wt% N,N-dimethylformamide (DMF), 10-50 tetrahydrofuran. After 24-72 h immersed under room temperature, the panel and foam core of sandwich composites can be separated completely. The carbon fiber of panel can be recycled completely as well, as shown in fig 9 This solvent recycling method has the advantages of low energy consumption, simple and rapid.

## Claims

1. A process to obtain a flame retardant lightweight foaming composites comprising the following steps:
i. mixing the following components:
- 40-80 wt.% of a resin selected from a benzoxazine vitrimer resin with at least one disulfide bond, an epoxy vitrimer resin with at least an imine-amine bond or an epoxy resin with at least one carboxylate bond, or a polyurethane vitrimer resin with at least one Diels-Alder bond and mixtures thereof;
- 0.2-10 wt.% of a catalyst selected from CuCl₂, trifluoroacetate and its salts, imidazole and its derivatives or zinc catalysts and their salts;
- 5-50 wt. % of a foaming agent selected from thermal expandable microsphere or glass microspheres,
- 0-10 wt.% of at least one toughening agent selected from epoxy resin, polyurethane resin or silicone resin;
- 0.5-25 wt. % of flame retardant additives;
ii. inducing the curing process of the mixture obtained in a previous foaming step by a thermal treatment at a temperature between 80-180ºC during a time between 3-30 minutes, so that a pre-foaming sheet is obtained;
iii. hot-pressing the pre-foaming cured material obtained in the previous step at a temperature between 120-200 ºC during a time between 1-6 hours.

2. The process according to the previous claim wherein the mixture of step (i) comprises 30-55 wt.% of resin.

3. The process according to any one of the previous claims wherein the matrix of the mixture of step (i) comprises a compound with the following formula: 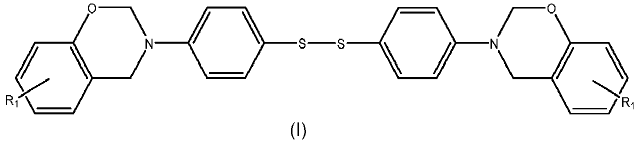 wherein R₁ is selected from H or alkyl C₁-C₂₀.

4. The process according to any one of the previous claims wherein the matrix of the mixture of step (i) comprises a compound with the following formula: 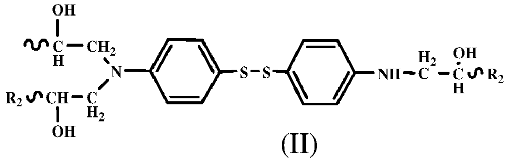 wherein R₂ is selected from the following groups:

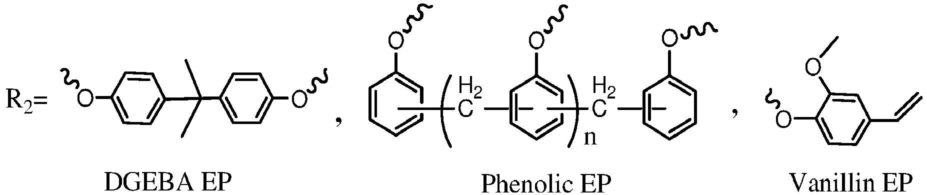

5. The process according to any one of the previous claims wherein the matrix of the mixture of step (i) comprises a compound with the following formula: 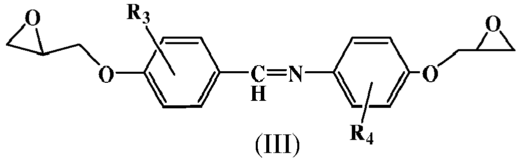 wherein R₃ and R₄ are independently selected from H, -OCH₃ or an alkyl C₁-C₄ group.

6. The process according to any one of the previous claims wherein the matrix of the mixture of step (i) comprises a compound with the following formula:

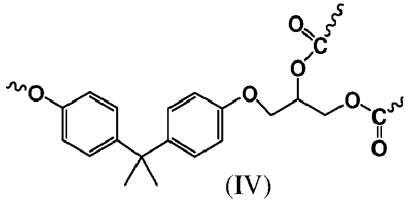

7. The process according to any one of the previous claims wherein the matrix of the mixture of step (i) comprises a compound with the following formula: 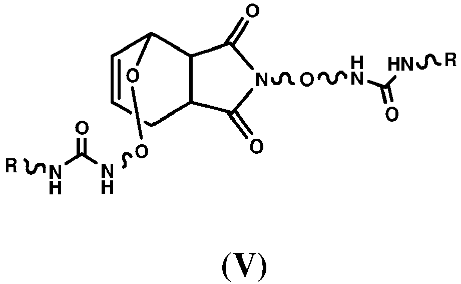 wherein R is selected from the following groups:

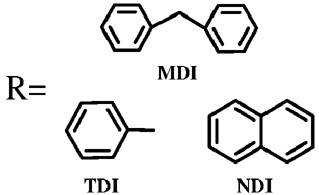

8. The process according to any one of the previous claims wherein the mixture of step (i) comprises a solvent selected from acetone, cyclohexanone, butyl alcohol, isopropanol, 1,4-dioxane, tolune, xylenes, chloroform, tetrahydrofuran (THF), N,N-dimethylformamide (DMF) or combinations thereof.

9. The process according to any one of the previous claims wherein the mixture of step (i) is deposited onto a support to carry out step (ii), wherein said support is preferably a non-woven chopped fiber mat structure.

10. The process according to previous claim wherein the support is a non-woven chopped fiber mat structure.

11. The process according to any one of the previous claims wherein the step (iii) is carried out on a mold with a defined shape.

12. A bendable and recyclable foaming composite obtained by the method of claims 1-11 **characterized in that**:
a) it comprises at least one foaming sheet comprising a vitrimer matrix, reinforced fibers embedded in said matrix and hollow close cells,
b) the closed cells structure of the foam composite is formed of thermal expandable microsphere or glass microsphere,
c) the resin forming the vitrimer matrix is partly cured, and forms dynamic bonds between the different foaming sheets to form a complete foaming composite.

13. The foaming composite of claim 12 **characterized in that** it presents a density between 120-250 g/m³, and/or a compressive strength of between 0.8-2 MPa and/or a heat resistance of between 80-150 °C and/or a flame retardant property of V-0 level and/or a thermal conductivity between 0.04-0.08 W/m.k.

14. A sandwich structure comprising the bendable and recyclable foaming composites according to claim 12, which preferably comprises a panel with a defined form.

15. An article for vehicles comprising the sandwich structure of claim 14.
